Europäisches Patentamt

European Patent Office

Office européen des brevets

(11) Veröffentlichungsnummer: **0 483 625 A1**

# EUROPÄISCHE PATENTANMELDUNG

(21) Anmeldenummer: **91117879.6**

(51) Int. Cl.5: **B62D 33/04**

(22) Anmeldetag: **19.10.91**

(30) Priorität: **27.10.90 DE 4034270**

(43) Veröffentlichungstag der Anmeldung:
**06.05.92 Patentblatt 92/19**

(84) Benannte Vertragsstaaten:
**AT BE CH DE ES FR GB IT LI LU NL**

(71) Anmelder: **Peters, Günter**
**Zewenerstrasse 22**
**W-5500 Trier(DE)**
Anmelder: **Orthaus, Dieter**
**Fritz-Ouant-Strasse 3**
**W-5500 Trier(DE)**
Anmelder: **Thetard, Wilhelm**

**Valdenair-Ring 105**
**W-5503 Konz(DE)**
Anmelder: **Maxheim, Bernhard**
**Adolf-Kolpingstrasse 3**
**W-5500 Trier(DE)**

(72) Erfinder: **Peters, Günter**
**Zewenerstrasse 22**
**W-5500 Trier(DE)**

(74) Vertreter: **Bernhardt, Winfrid, Dr.-Ing.**
**Kobenhüttenweg 43**
**W-6600 Saarbrücken(DE)**

(54) **Seitenwand eines Kastenaufbaues eines Lastkraftwagens oder Anhängers.**

(57) Eine Seitenwand eines Kastenaufbaues eines Lastkraftwagens oder Anhängers ist in mindestens vier gelenkig miteinander verbundene Seitenwandteile (1;2;4;5) waagerecht unterteilt und unter Verwinkeln der Seitenwandteile (1;2;4;5) gegeneinander aus der Seitenwandebene heraus mittels einer Antriebsvorrichtung (19,25) nach oben zu öffnen. Die Gelenkachse zwischen dem zweiten (2) und dem dritten Seitenwandteil (4) von oben ist durch zwei seitliche senkrechte Führungen (33) und in diese greifende Vorsprünge (23) der Seitenwand (1,2,4,5) etwa in der Seitenwandebene gehalten, und die Antriebsvorrichtung (19,25) greift zum Teil (19) über und zum Teil (25) unter der genannten Gelenkachse an der Seitenwand (1,2,4,5) an, derart, daß die Seitenwandteile (1;2;4;5) in wechselnder Richtung gegeneinander verwinkelt und aneinandergeklappt werden.

Das oberste Seitenwandteil (1) ist an seiner oberen Längsseite etwa im rechten Winkel fest mit der zugeordneten Längsseite eines Dachabschnittes (8) des Kastenaufbaues verbunden, der mit seiner anderen Längsseite (9) nach oben schwenkbar am Kastenaufbau angelenkt ist.

Die Seitenwand ist platzsparend und stabil und läßt sich auf einfache Art und Weise aufklappen.

Fig. 10

Die Erfindung betrifft eine Seitenwand eines Kastenaufbaues eines Lastkraftwagens oder Anhängers, die in gelenkig miteinander verbundene Seitenwandteile waagerecht unterteilt ist und unter Verwinkeln der Seitenwandteile gegeneinander aus der Seitenwandebene heraus mittels einer Antriebsvorrichtung nach oben zu öffnen ist, bis das untere Seitenwandteil an das obere herangeklappt ist.

Bei einer bekannten derartigen Seitenwand klappt das untere Seitenwandteil unter das obere Seitenwandteil; die beiden Seitenwandteile stehen zusammen als Vordach über. Nachteilig ist, daß sie dabei das Beladen des Wagens mit einem Hubstapler o. dgl. behindern können. Nachteilig ist ferner, daß die dabei auftretenden Kräfte sehr groß sind, so daß es oftmals zu Beschädigungen der Gelenke der Seitenwandteile kommt, vor allem aber zu einem Durchbiegen der bis zu 13 m langen, nur an ihren Enden durch die Antriebsvorrichtung gehaltenen Seitenwandteile. Das stört schon beim Öffnungsvorgang.

Es ist bekannt, die beiden nach oben geklappten Seitenwandteile unter das Dach bzw. über das Dach des Kastenaufbaues zu verschieben. Dies setzt jedoch eine aufwendige Mechanik und einen seitlichen Platzbedarf von mindestens einem Meter voraus, um einen Öffnungs- oder Schließvorgang ungehindert durchführen zu können.

Die Aufgabe der Erfindung besteht darin, eine Seitenwand der eingangs genannten Art vorzuschlagen, die platzsparend und stabil ist und sich auf einfache Art und Weise aufklappen läßt.

Diese Aufgabe wird dadurch gelöst, daß die Seitenwand in mindestens vier solche Seitenwandteile unterteilt ist und die Gelenkachse zwischen dem zweiten und dem dritten Seitenwandteil von oben durch zwei seitliche senkrechte Führungen und in diese greifende Vorsprünge der Seitenwand etwa in der Seitenwandebene gehalten ist und die Antriebsvorrichtung wenigstens zum Teil in oder unter der genannten Gelenkachse an der Seitenwand angreift, derart, daß die Seitenwandteile in wechselnder Richtung gegeneinander verwinkelt und aneinandergeklappt werden.

Durch die Unterteilung in eine größere Zahl von Seitenwandteilen wird die Zahl der Gelenkverbindungen vergrößert, die bei dem Faltvorgang jeweils als Winkelprofile wirken und so stabilisieren.

Noch vorteilhafter wird die neue Konstruktion in der weiteren Ausgestaltung, daß das oberste Seitenwandteil an seiner oberen Längsseite etwa im rechten Winkel fest mit der zugeordneten Längsseite eines Dachabschnittes des Kastenaufbaues verbunden ist, der mit seiner anderen Längsseite nach oben schwenkbar am Kastenaufbau angelenkt ist.

Dann ergibt sich eine senkrechte Endstellung der Seitenwandteile und auf diese Weise Stabilität im zusammengeklappten Zustand, in dem die beim Öffnungsvorgang stabilisierenden Winkel wieder verschwunden sind.

Ferner stehen die Seitenwandteile nach oben über und nicht nach der Seite, so daß sie beim Be- und Entladen nicht stören. Die verringerte Breite der Seitenwandteile verlangt andererseits auch nach oben hin nicht sehr viel Platz, desgleichen übrigens beim Öffnungsvorgang nach der Seite heraus.

Bei einer vorteilhaften Ausführungsform sind an lotrechten Holmen des Kastenaufbaues Verriegelungselemente angeordnet, die mit an unteren Seitenwandteilen angeordneten zugeordneten Verriegelungselementen durch Verschieben in lotrechter Richtung in Eingriff bringbar sind, und die genannte Antriebsvorrichtung ist derart ausgebildet, daß sie beim Öffnen der Seitenwand diese unteren Seitenwandteile erst nach einer bloßen Verschiebung nach oben aus der Seitenwandebene heraus gegeneinander verwinkelt und beim Schließen der Seitenwand sie sich schon kurz vor der Schließstellung in die Seitenwandebene legen läßt.

Damit wird jeder Schließvorgang mit einem Zwangsverschluß abgeschlossen, so daß eine hohe Sicherheit gegeben ist. Bislang ist auch keine Seitenwand für einen Kastenaufbau bekannt, bei der ein vollständiger Zwangsverschluß gegeben ist, der den Schließvorgang abschließt und die Seitenwand gleichzeitig sichert.

Weitere Maßnahmen, die zur vorteilhaften Ausgestaltung der Erfindung dienen können, sind in der folgenden Beschreibung von Ausführungsbeispielen beschrieben und in den Zeichnungen dargestellt.

Es zeigen

| Fig. 1 | eine Seitenwand eines Kastenaufbaues eines Lastkraftwagens in geschlossenem Zustand in Draufsicht, |
| Fig. 2 | die Seitenwand in teilweise geöffnetem Zustand in Seitenansicht mit Darstellung der Verriegelungselemente in vergrößertem Maßstab im Detail, |
| Fig. 3 | die Seitenwand in weiter geöffnetem Zustand in Seitenansicht, |
| Fig. 4 | die Seitenwand in noch weiter geöffnetem Zustand in Seitenansicht, |
| Fig. 5 | eine Seitenwand mit anderer Antriebsvorrichtung in geschlossenem Zustand in Seitenansicht, |
| Fig. 6 | die Seitenwand nach Fig. 5 in teilweise geöffnetem Zustand in Seitenansicht, |

| Fig. 7 | die Seitenwand nach Fig. 5 in geöffnetem Zustand in Seitenansicht, |
| Fig. 8 | ein Führungselement und |
| Fig. 9 bis 11 | analog zu Fig. 5 bis 7 zwei Abwandlungen. |

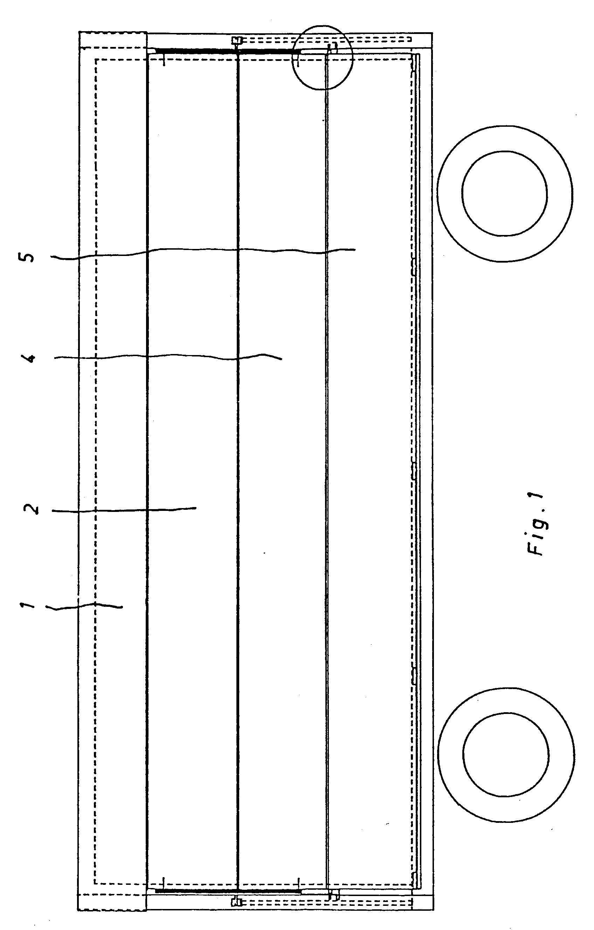

Nach den Fig. 1 bis 7 besteht eine Seitenwand eines Kastenaufbaues aus vier Seitenwandteilen 1,2,4 und 5 (Fig. 1).

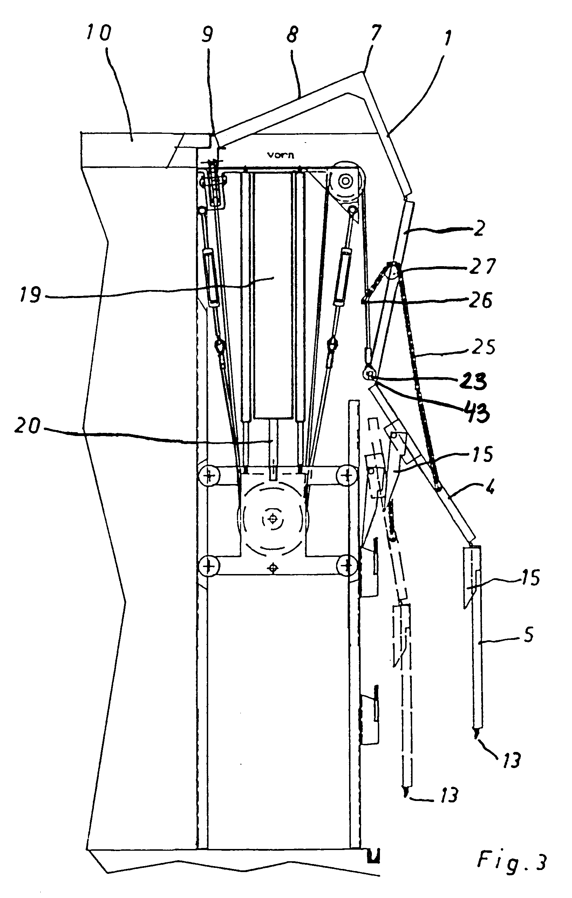

Wie insbesondere die Fig. 3 zeigt, ist das obere Seitenwandteil 1 an seiner oberen Längskante 7 im rechten Winkel fest mit der zugeordneten Längsseite eines Dachabschnittes 8 verbunden, der mit seiner anderen Längsseite 9 nach oben schwenkbar am Kastenaufbau 10 angelenkt ist.

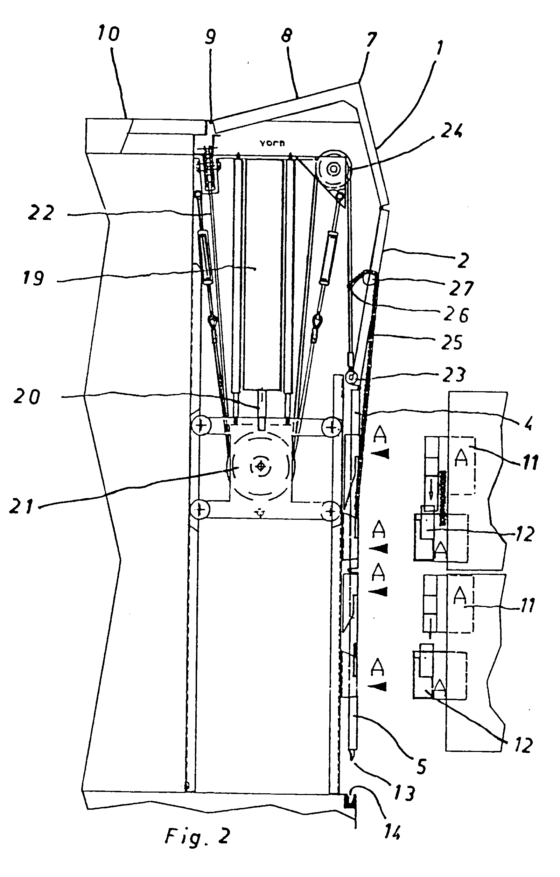

Wie die Fig. 2 und 3 zeigen, ist das Seitenwandteil 2 an seinem oberen Längsrand derartig gelenkig mit dem unteren Längsrand des oberen Seitenwandteils 1 verbunden, daß das Seitenwandteil 2 nach innen klappbar ist. Das Seitenwandteil 4 ist an seinem oberen Längsrand derartig gelenkig mit dem unteren Längsrand des Seitenwandteils 2 verbunden, daß das Seitenwandteil 4 nach außen auf das Seitenwandteil 2 klappbar ist.

Das Seitenwandteil 5 ist schließlich an seinem oberen Längsrand derartig gelenkig mit dem Seitenwandteil 4 verbunden, daß das Seitenwandteil 5 nach innen an das Seitenwandteil 4 klappbar ist.

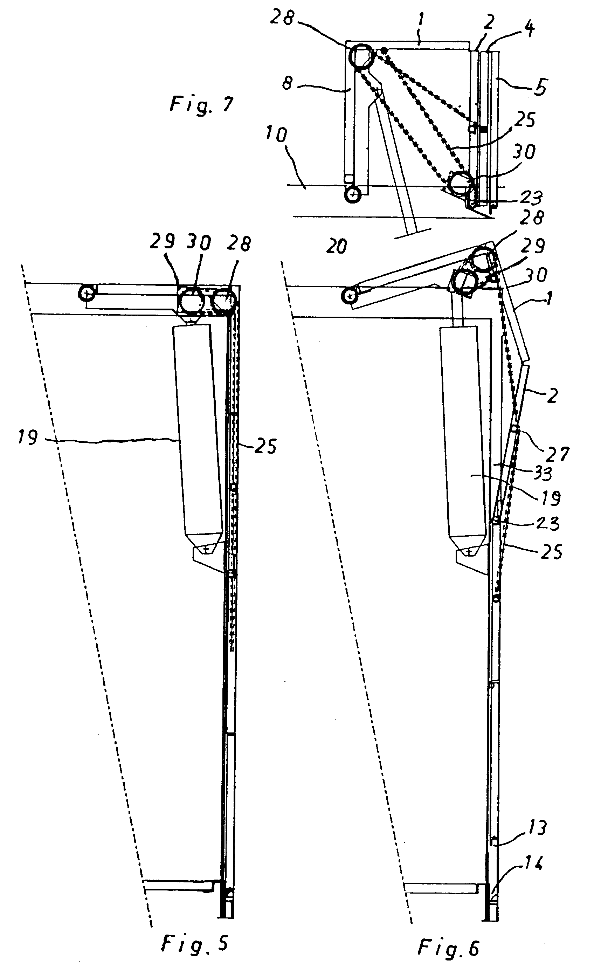

In aufgeklappter Stellung der Seitenwand hängen die Seitenwandteile 2, 4 und 5 am oberen Seitenwandteil 1 oberhalb des Kastenaufbaues 10, wie dies die Fig. 7 zeigt. Somit ist ein ungestörtes Be- und Entladen des Kastenaufbaues möglich.

An den beiden Seiten der Seitenwand, d.h. an der Vorderseite und der Rückseite des Kastenaufbaues 10, sind an diesem zwei Führungen 33 angebracht, in denen zwei als Vorsprünge an dem Seitenwandteil 2 angeordnete Rollen 23 gleiten. Die Rollen 23 liegen nahe an der Gelenkachse 43 zwischen den Seitenwandteilen 2 und 4.

Wie die Detailzeichnung der Fig. 2 zeigt, sind an den Seitenwandteilen 4 und 5 Verriegelungselemente 12 angeordnet, die mit an lotrechten Holmen 16 des Kastenaufbaues 10 angeordneten zugeordneten Verriegelungselementen 11 zusammenwirken. Die Verriegelungselemente 11 und 12 gelangen durch eine Verschiebung der Seitenwandabschnitte in lotrechter Richtung in Eingriff bzw. außer Eingriff.

In Schließstellung der Seitenwand greift der untere Längsrand 13des unteren Seitenwandteiles 5 in eine zugeordnete Nut 14 des Kastenaufbaues 10.

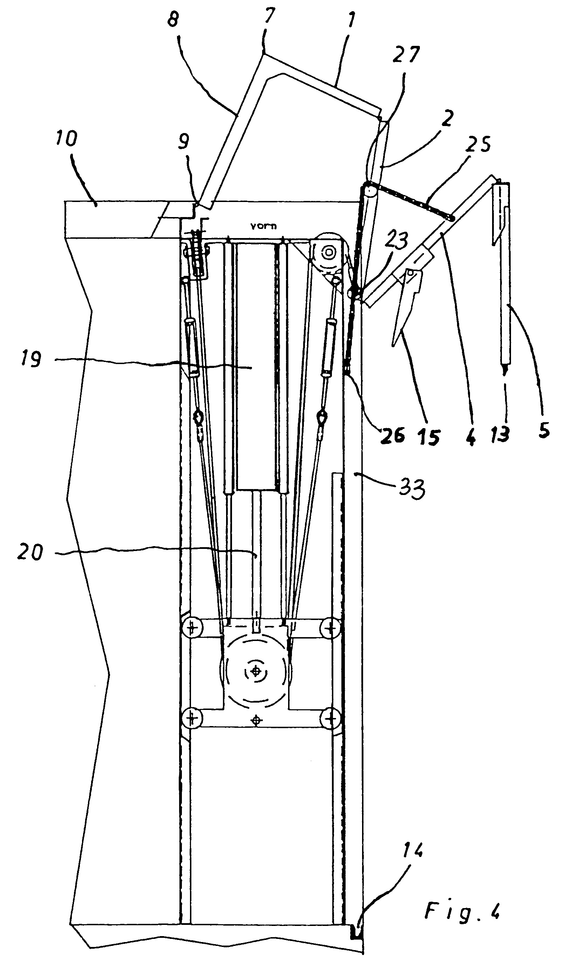

Wie die Fig. 3 und 4 zeigen, sind an den Seitenwandabschnitten einarmige Hebel als Führungsteile 15 schwenkbar angeordnet. Die Führungsteile 15 schwenken aufgrund der Schwerkraft beim Klappen der Seitenwandabschnitte nach unten und nach der Seitenwandebene hin und gelangen so beim Schließen der Seitenwand in am Kastenaufbau zugeordnete Führungselemente, so daß die Seitenwandteile sicher in Schließstellung geführt werden.

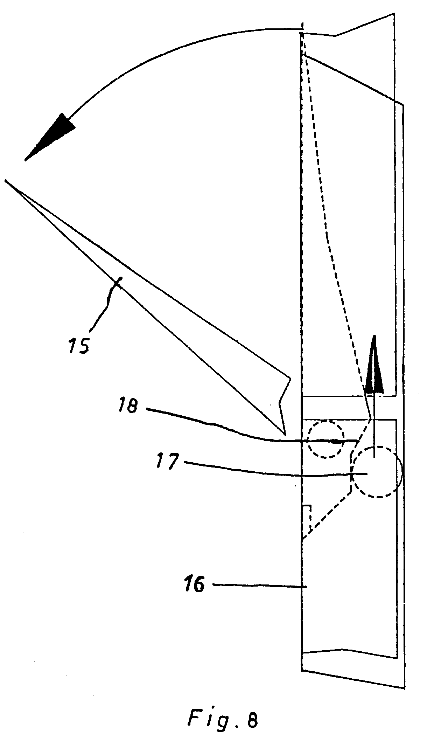

Nach Fig. 8 sind die Führungsteile 15 als klappbare Hebel an Holmen 16 des Kastenaufbaues 10 gelagert. Sie werden über durch die Seitenwandteile bewegte Bolzen 17 über eine zugeordnete Kurvenführung 18 aus- bzw. eingeklappt.

Bei der Ausführungsform einer Seitenwand nach den Fig. 2 bis 4 weist die Antriebsvorrichtung einen hydraulisch oder pneumatisch betätigbaren Druckzylinder 19 mit Kolbenstange 20 auf. Das freie Ende der Kolbenstange 20 trägt eine Umlenkrolle 21, über die ein Seil 22 geführt ist. Das Seil 22 ist an seinem einen Ende mit dem Kastenaufbau 10 verbunden, über die Umlenkrolle 21 und über eine in der oberen Ecke des Kastenaufbaues 10 angeordnete weitere Umlenkrolle 24 geführt und mit seinem anderen Ende an dem unteren Längsrand des Seitenwandteiles 2 befestigt.

Wird die Kolbenstange 20 nach unten geschoben, so werden über das Seil 22 die Seitenwandteile nach oben gezogen, bis sie in eine Stellung gelangen, wie sie beispielsweise in Fig. 7 dargestellt ist.

Zum Aneinanderklappen der Seitenwandteile ist ein Seilzug 25 vorgesehen, der mit seinem einen Ende 26 am Kastenaufbau 10 und mit seinem anderen Ende am Seitenwandteil 4 befestigt ist. Der Seilzug 25 ist außerdem über eine Umlenkrolle 27 am Seitenwandteil 2 geführt.

Die Länge und die Befestigung des Seilzuges 25 und die Anordnung der Umlenkrolle 27 sind derart gewählt, daß der Seilzug erst in einer Stellung wirksam wird, wie es in Fig. 2 dargestellt ist. Dadurch erfolgt zu Beginn der Öffnungsbewegung der Seitenwand erst eine Verschiebung der unteren Seitenwandteile 4 und 5 in lotrechter Richtung nach oben, so daß die Verriegelungselemente 11 und 12 außer Eingriff gelangen.

Bei der Ausführungsform der Antriebsvorrichtung nach den Fig. 5 bis 7 ist ein Druckzylinder 19 mit seiner Kolbenstange 20 zwischen Kastenaufbau 10 und Dachabschnitt 8 angeordnet. Durch Betätigung des Druckzylinders 19 wird der Dachabschnitt 8 nach oben in die in Fig. 7 dargestellte Stellung geschwenkt. Der Seilzug 25 ist mit seinem einen Ende am Seitenwandteil 4 befestigt. Der Seilzug 25 ist über eine Umlenkrolle 27 (Fig. 6) am Seitenwandteil 2, eine weitere Umlenkrolle 28 am mit dem oberen Seitenwandteil 1 verbundenen Dachabschnitt 8 und eine an der oberen, vorderen Kante des Kastenaufbaues 10 an einem schwenkbaren Hebel 29 angeordnete weitere Umlenkrolle 30 geführt. Das andere Ende des Seilzuges 25 ist am oberen Seitenwandteil 1 befestigt.

Zu Beginn der Öffnungsbewegung schwenkt der Hebel 29 aus der in Fig. 5 gezeigten Stellung in die in den Fig. 6 und 7 dargestellte Stellung. Durch diese Schwenkbewegung wird gewährleistet, daß der Seilzug 25 erst nach einer lotrechten Verschiebung der Seitenwandabschnitte wirksam wird, so daß die Verriegelungselemente außer Eingriff gelangen.

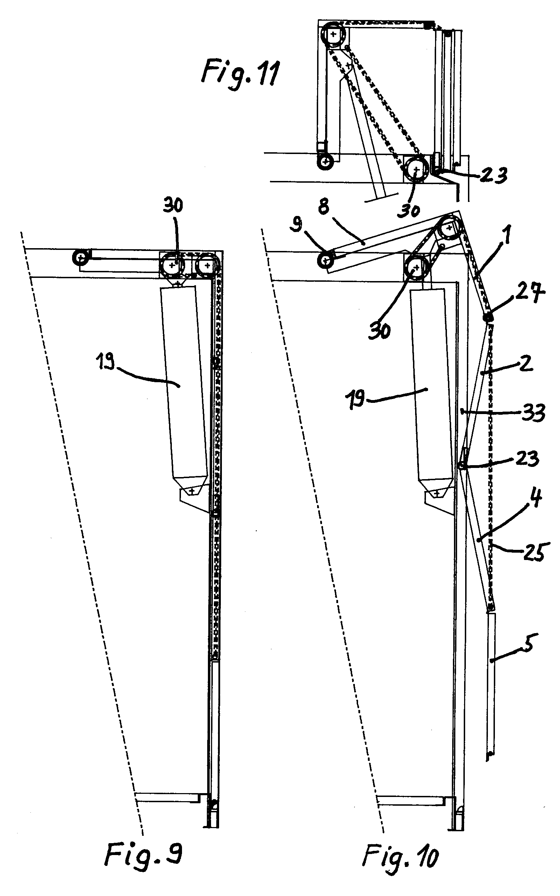

In Fig. 9 bis 11 ist die Umlenkrolle 30 fest angeordnet, so daß der Seilzug 25 schneller angezogen wird. Die Umlenkrolle 27 ist an die Gelenkachse zwischen den Seitenwandteilen 1 und 2 verlegt, das Ende des Seilzuges 25 an die Gelenkachse zwischen den Seitenwandteilen 4 und 5.

**Patentansprüche**

1. Seitenwand eines Kastenaufbaues eines Lastkraftwagens oder Anhängers, die in gelenkig miteinander verbundene Seitenwandteile (1;2;4;5) waagerecht unterteilt ist und unter Verwinkeln der Seitenwandteile (1;2;4;5) gegeneinander aus der Seitenwandebene heraus mittels einer Antriebsvorrichtung (19-27 bzw. 19,25-30) nach oben zu öffnen ist, bis das untere Seitenwandteil an das obere herangeklappt ist,
dadurch gekennzeichnet,
daß die Seitenwand (1,2,4,5) in mindestens vier solche Seitenwandteile (1;2;4;5) unterteilt ist und die Gelenkachse (43) zwischen dem zweiten (2) und dem dritten Seitenwandteil (4) von oben durch zwei seitliche senkrechte Führungen (33) und in diese greifende Vorsprünge (23) der Seitenwand (1,2, 4,5) etwa in der Seitenwandebene gehalten ist und die Antriebsvorrichtung (19-27 bzw. 19,25-30) wenigestens zum Teil (25-27 bzw. 25-30) in oder unter der genannten Gelenkachse (25-27 bzw. 25-30) an der Seitenwand (1,2,4,5) angreift, derart, daß die Seitenwandteile (1;2;4;5) in wechselnder Richtung gegeneinander verwinkelt und aneinandergeklappt werden.

2. Seitenwand nach Anspruch 1,
dadurch gekennzeichnet,
daß das oberste Seitenwandteil (1) an seiner oberen Längsseite (7) etwa im rechten Winkel fest mit der zugeordneten Längsseite eines Dachabschnittes (8) des Kastenaufbaues (10) verbunden ist, der mit seiner anderen Längsseite (9) nach oben schwenkbar am Kastenaufbau angelenkt ist.

3. Seitenwand nach Anspruch 1 oder 2,
dadurch gekennzeichnet,
daß zur Betätigung der Seitenwand ein hydraulisch oder pneumatisch betätigbarer Druckzylinder (19) mit Kolbenstange (21) vorgesehen ist, der wirksam zwischen Seitenwand und Kastenaufbau (10) angeordnet ist.

4. Seitenwand nach Anspruch 3,
dadurch gekennzeichnet,
daß das freie Ende der Kolbenstange (20) eine Umlenkrolle (21) trägt, über die ein mit der Seitenwand verbundenes Seil (22) geführt ist.

5. Seitenwand nach einem der Ansprüche 1 bis 4,
dadurch gekennzeichnet,
daß die Antriebsvorrichtung, vorzugsweise zusätzlich zu dem genannten Seil (29), einen Seilzug (25) aufweist, der mit seinem einen Ende (26) am Kastenaufbau (10) und mit seinem anderen Ende am dritten Seitenwandteil (4) von oben befestigt ist und der über eine Umlenkrolle (27) o. dgl. am zweiten Seitenwandteil (2) von oben geführt ist.

6. Seitenwand nach den Ansprüchen 2 und 3,
dadurch gekennzeichnet,
daß der Druckzylinder (19) als Schwenkantrieb an dem genannten Dachabschnitt (8) angreift.

7. Seitenwand nach Anspruch 6,
dadurch gekennzeichnet,
daß die Antriebsvorrichtung einen Seilzug (25) aufweist, dessen eines Ende am dritten Seitenwandteil (4) von oben befesteigt ist und über eine Umlenkrolle (27) o. dgl. am zweiten Seitenwandteil (2) von oben, eine Umlenkrolle (28) am mit dem oberen Seitenwandteil (1) verbundenen Dachabschnitt (8) und eine an der oberen, vorderen Kante des Kastenaufbaues (10), ggf. an einem schwenkbaren Hebel (29), angeordnete Umlenkrolle (30) geführt ist und dessen anderes Ende am oberen Seitenwandteil (1) oder dem genannten Dachabschnitt (8) befestigt ist.

8. Seitenwand nach einem der Ansprüche 1 bis 7,
dadurch gekennzeichnet,
daß an lotrechten Holmen (16) des Kastenaufbaues (10) Verriegelungselemente (11) angeordnet sind, die mit an unteren Seitenwandteile (4,5) angeordneten zugeordneten Verriegelungselementen (12) durch Verschieben in lotrechter Richtung in Eingriff und außer Eingriff bringbar sind, und daß die genannte Antriebsvorrichtung (19-27 bzw. 19,25-30) derart ausgebildet ist, daß sie beim Öffnen der Seitenwand diese unteren Seitenwandteile (4;5) erst nach einer bloßen Verschiebung nach oben aus der Seitenwandebene heraus gegeneinander verwinkelt und beim Schließen der Seitenwand sie sich schon kurz vor der Schließstellung in die Seitenwandebene legen läßt.

9.  Seitenwand nach Anspruch 8,
    dadurch gekennzeichnet, daß mit den genannten unteren Seitenwandteilen (4;5) und/oder mit den Holmen (16) des Kastenaufbaues (10) ausklappbare Führungsteile (15) zum Fangen und Führen dieser Seitenwandteile (4;5) in die Schließstellung verbunden sind.

Fig. 1

EP 0 483 625 A1

Fig. 2

Fig. 3

vorn

Fig. 4

Fig. 7

Fig. 5

Fig. 6

15

18

17

16

*Fig. 8*

Fig.11

Fig.9

Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 412 239 (MACAR OLDENZAAL BV) * Seite 3, Zeile 9 - Seite 4, Zeile 34; Abbildungen 1-3 * --- | 1-4 | B62D33/04 |
| A | DE-U-7 416 667 (BRANDT) * Seite 4, Zeile 17 - Zeile 33; Abbildungen 2,3 * --- | 1,2 | |
| A | DE-U-7 332 808 (VEREINIGTE FLUGTECHNISCHE WERKE - FOKKER) * Seite 4, Zeile 4 - Zeile 20; Abbildung 1 * ----- | 3 | |
| | | | **RECHERCHIERTE SACHGEBIETE (Int. Cl.5)** |
| | | | B62D |

Der vorliegende Recherchenbericht wurde für alle Patentansprüche erstellt

| Recherchenort | Abschlußdatum der Recherche | Prüfer |
|---|---|---|
| BERLIN | 29 JANUAR 1992 | LUDWIG H.J. |